# EUROPÄISCHE PATENTSCHRIFT

(11) **EP 3 359 862 B1**
(45) Veröffentlichungstag und Bekanntmachung des Hinweises auf die Patenterteilung: **06.05.2020**
(21) Anmeldenummer: 16777971.9
(22) Anmeldetag: 03.10.2016
(51) Int. Cl.: F16L 37/088, F02M 35/10

(54) **STECKVERBINDER ZUM VERBINDEN VON LEITUNGEN FÜR FLÜSSIGE ODER GASFÖRMIGE MEDIEN**
CONNECTOR FOR CONNECTING CONDUITS FOR LIQUID OR GASEOUS MEDIA
RACCORD EMMANCHABLE POUR LE RACCORDEMENT DE CONDUITES DE MATIÈRES LIQUIDES OU GAZEUSES

(30) Priorität: 07.10.2015 AT 508552015
(43) Veröffentlichungstag der Anmeldung: 15.08.2018
(73) Patentinhaber: Henn GmbH & Co KG., 6850 Dornbirn (AT)
(72) Erfinder: BALDREICH, Wolfgang, 6850 Dornbirn (AT); HARTMANN, Harald, 6850 Dornbirn (AT)
(74) Vertreter: Burger, Hannes
(86) Internationale Anmeldenummer: PCT/EP2016/073540
(87) Internationale Veröffentlichungsnummer: WO 2017/060184

(56) Entgegenhaltungen:
- EP-A1- 2 360 411
- WO-A1-2005/045299
- WO-A1-2005/103550
- WO-A1-2009/094679

## Beschreibung

Die Erfindung betrifft einen Steckverbinder zum Verbinden von Leitungen für flüssige oder gasförmige Medien, sowie ein Verfahren zum Herstellen eines derartigen Steckverbinders.

Aus der EP 2 360 411 A1 und der WO 2009/094679 A1 ist ein gattungsgemäßer Steckverbinder für ein Kraftfahrzeug bekannt. Der Steckverbinder zum Verbinden von Leitungen für flüssige oder gasförmige Medien umfasst eine Hülse, die eine Einstecköffnung aufweist. In die Einstecköffnung ist ein Stutzen einsteckbar. Weiters umfasst der Steckverbinder und eine die Hülse zumindest über einen Teil ihres Umfangs umgebende Rastfeder, welche zwischen einer Raststellung zum Verrasten des mit dem Steckverbinder zusammengesteckten Stutzens und einer gegenüber der Hülse verrasteten Freigabestellung, in der die Verrastung mit dem Stutzen gelöst ist und der Stutzen aus der Einstecköffnung der Hülse herausziehbar ist, verstellbar ist. Die Rastfeder ragt zumindest in ihrer Raststellung über mindestens einen Abschnitt ihrer Längserstreckung, in welchem sie mit dem Stutzen verrastbar ist, durch eine Durchtrittsöffnung der Hülse in den von der Hülse umgebenden Innenraum. Weiters ist und wobei die Rastfeder in ihrer verrasteten Freigabestellung an mindestens einer Raststelle der Rastfeder hinter einen Haltevorsprung der Hülse in eine Haltevertiefung der Hülse eingerastet. Der Haltevorsprung springt gegenüber der Haltevertiefung in axialer Richtung der Hülse vor.

Der Steckverbinder der EP 2 360 411 A1 kann bei Kraftaufbringung im Bereich der Rastfeder leicht beschädigt werden.

Aufgabe der vorliegenden Erfindung war es, die Nachteile des Standes der Technik zu überwinden und eine Vorrichtung zur Verfügung zu stellen, welche eine erhöhte Sicherheit gegen Bauteilgebrechen aufweist, sowie ein Verfahren zur Herstellung einer derartigen Vorrichtung anzugeben.

Diese Aufgabe wird durch eine Vorrichtung und ein Verfahren gemäß den Ansprüchen 1 und 9 gelöst.

Die erfindungsgemäße Vorrichtung ist ein Steckverbinder für ein Kraftfahrzeug, mit einem Verbinderkörper, welcher Verbinderkörper einen Ringraum aufweist, der zwischen einem hülsenförmigen, im Querschnitt eine zentrale Längsachse des Steckverbinders umgebenden ersten Mantelabschnitt und einem hülsenförmigen, im Querschnitt die zentrale Längsachse umgebenden zweiten Mantelabschnitt des Steckverbinders liegt. Der erste Mantelabschnitt ist vom zweiten Mantelabschnitt umgeben und der erste Mantelabschnitt des Verbinderkörpers ist mit dem zweiten Mantelabschnitt an einem ersten Endabschnitt durch einen ersten Stirnwandabschnitt verbunden. Die Mantelabschnitte sind an einem zweiten Endabschnitt offen zueinander. Im ersten Mantelabschnitt und im zweiten Mantelabschnitt sind zumindest zwei Durchtrittsöffnungen ausgebildet sind, welche zur Aufnahme eines Arretierungselementes vorgesehen sind, welches Arretierungselement zum Sichern des Steckverbinders relativ zu einem Gegensteckverbinder vorgesehen ist. Im Verbinderkörper zwischen dem ersten Mantelabschnitt und dem zweiten Mantelabschnitt ist ein Verstärkungselement eingelegt, wobei das Verstärkungselement zumindest im Bereich einer der Durchtrittsöffnungen angeordnet ist.

Ein Vorteil der erfindungsgemäßen Ausbildung des Steckverbinders liegt darin, dass der Verbinderkörper durch das Verstärkungselement besonders im Bereich der Durchtrittsöffnungen zur Aufnahme des Arretierungselementes verstärkt wird. Somit kann durch das Verstärkungselement ein unerwünschtes Aufweiten der Durchtrittsöffnungen hinangehalten werden. Insbesondere kann dadurch sichergestellt werden, dass die Verbindung zwischen Steckverbinder und Gegensteckverbinder über die Lebensdauer des Kraftfahrzeuges eine möglichst hohe Festigkeit und Dichtheit aufweist.

Weiters kann es zweckmäßig sein, dass das Verstärkungselement zumindest eine Ausnehmung aufweist, welche zumindest teilweise mit einer der Durchtrittsöffnungen korrespondiert. Von Vorteil ist hierbei, dass die Ausnehmung des Verstärkungselementes die Durchtrittsöffnung im Verbinderkörper verstärken kann.

Ferner ist vorgesehen, dass der Verbinderkörper vier Durchtrittsöffnungen aufweist, welche dazu ausgebildet sind um vom Arretierungselement durchragt zu werden, wobei die zumindest eine Ausnehmung des Verstärkungselementes mit zumindest einer der Durchtrittsöffnungen deckungsgleich ist und dadurch eine gemeinsame Durchtrittsöffnung ausgebildet ist. Von Vorteil ist hierbei, dass die gemeinsame Durchtrittsöffnung in einem Stanzvorgang erzeugt werden kann, wobei das Verstärkungselement und der Verbinderkörper gemeinsam gestanzt werden. Somit ist sichergestellt, dass die Ausnehmung im Verstärkungselement und die Durchtrittsöffnung im Verbinderkörper deckungsgleich sind. Darüber hinaus kann durch den gemeinsamen Stanzvorgang erreicht werden, dass sich das Verstärkungselement und der Verbinderkörper formschlüssig ineinander verkeilen, da beim Stanzvorgang ein Stanzgrad erzeugt wird.

Weiters kann vorgesehen sein, dass die zumindest eine Ausnehmung des Verstärkungselementes kleiner ausgebildet ist als die damit korrespondierende Durchtrittsöffnung. Von Vorteil ist hierbei, dass dadurch eine Auflagefläche geschaffen werden kann und das Arretierungselement in der Freigabestellung an dieser Auflagefläche aufliegen kann.

Vorteilhaft ist auch eine Ausprägung, gemäß welcher vorgesehen sein kann, dass das Verstärkungselement als Hülsensegment ausgebildet ist. Von Vorteil ist hierbei, dass das Verstärkungselement aus einem Blechstreifen ausgestanzt werden kann und anschließend zum Hülsensegment umgeformt werden kann. Als Hülsensegment wird eine Hülse bezeichnet, welche nicht umlaufend ausgebildet ist, sondern welche sich nur über teile des Umfanges erstreckt. Alternativ zur Verwendung eines Hülsensegmentes kann auch eine geschlossene Hülse verwendet werden.

Gemäß einer Weiterbildung ist es möglich, dass ein Außdendurchmesser des ersten Mantelabschnittes gleich groß ist, wie ein Innendurchmesser des Verstärkungselementes. Von Vorteil ist hierbei, dass das Verstärkungselement am ersten Mantelabschnitt anliegt und diesem somit versteifen kann.

Ferner kann es zweckmäßig sein, dass im zweiten Mantelabschnitt eine Sicke ausgebildet ist, mittels welcher das Verstärkungselement in radialer Richtung fixiert ist. Durch die Sicke kann das Verstärkungselement zwischen ersten Mantelabschnitt und zweiten Mantelabschnitt geklemmt werden.

Darüber hinaus kann vorgesehen sein, dass der Verbinderkörper aus einem ersten Werkstoff und das Verstärkungselement aus einem zweiten Werkstoff gefertigt ist, wobei der zweite Werkstoff eine höhere Festigkeit aufweist als der erste Werkstoff. Dabei ist von Vorteil, dass für das Verstärkungselement ein Werkstoff verwendet werden kann, welcher eine hohe Festigkeit aufweist und welcher gegebenenfalls eine geringe Umformfähigkeit aufweist. Für den Verbinderkörper kann ein Werkstoff verwendet werden, welcher eine hohe Umformfähigkeit aufweist, um die komplexe Geometrie des Verbinderkörpers herstellen zu können.

Beim Verfahren zum Herstellen des Steckverbinders ist vorgesehen, dass in einem ersten Verfahrensschritt der Verbinderkörper geformt wird und optional die Durchtrittsöffnungen in den Verbinderkörper eingebracht werden; in einem weiteren Verfahrensschirtt wird ein Verstärkungselement vorgeformt; in einem weiteren Verfahrensschritt wird das Verstärkungselement axial in den Verbinderkörper eingeschoben und im Verbinderkörper positioniert. Von Vorteil am erfindungsgemäßen Verfahren ist, dass das Verstärkungselement in einem eigenen Verfahrensschritt vorgeformt werden kann und somit das Verstärkungselement unabhängig vom Verbinderkörper geformt werden kann.

Weiters ist vorgesehen, dass in einem weiteren Verfahrensschritt der Verbinderkörper und das Verstärkungselement gemeinsam gestanzt werden und dadurch eine gemeinsame Durchtrittsöffnung hergestellt wird. Somit ist sichergestellt, dass die Ausnehmung im Verstärkungselement und die Durchtrittsöffnung im Verbinderkörper deckungsgleich sind. Darüber hinaus kann durch den gemeinsamen Stanzvorgang erreicht werden, dass sich das Verstärkungselement und der Verbinderkörper formschlüssig ineinander verkeilen, da beim Stanzvorgang ein Stanzgrad erzeugt wird.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer Ausführungsvariante einer Steckerbaugruppe in einem Viertelschnitt;
- Fig. 2: ein Querschnitt eines Ausführungsbeispiels des Steckverbinders mit Schnittführung im Bereich eines Arretierungselementes;
- Fig. 3: eine Schnittdarstellung des Steckverbinders mit Schnittführung entlang einer zentralen Längsachse des Steckverbinders;
- Fig. 4: eine Explosionsdarstellung des Steckverbinders;
- Fig. 5: eine perspektivische Ansicht der Steckverbinder, wobei sich das Arretierungselement in einer Raststellung befindet;
- Fig. 6: eine Detailansicht des Arretierungselementes, wobei sich das Arretierungselement in einer Raststellung befindet;
- Fig. 7: eine perspektivische Ansicht des Steckverbinders, wobei sich das Arretierungselement in einer Freigabestellung befindet;
- Fig. 8: eine Detailansicht des Arretierungselementes, wobei sich das Arretierungselement in einer Freigabestellung befindet.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

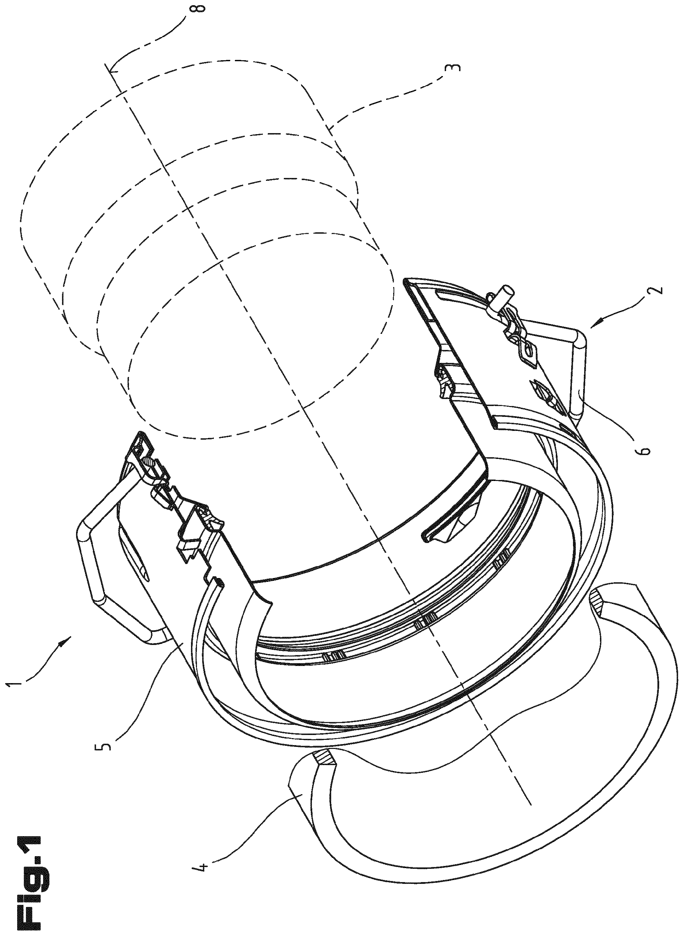

Fig. 1 zeigt eine perspektivische Ansicht einer Steckerbaugruppe 1 mit einem Steckverbinder 2, wobei diese in einem Viertelschnitt geschnitten dargestellt sind. Weiters ist in Fig. 1 schematisch ein Gegensteckverbinder 3 dargestellt, welcher mit der Steckerbaugruppe 1 verbindbar ist. Das Zusammenwirken zwischen Steckerbaugruppe 1 und einem Gegensteckverbinder 3 ist in der AT 509 196 B1 hinlänglich beschrieben.

Weiters ist schematisch ein Rohr 4 dargestellt, an welches der Steckverbinder 2 gekoppelt sein kann. Das Rohr 4 kann beispielsweise ein starres Element, wie etwa ein Kunststoffrohr sein. In einer andern Ausführungsvariante kann das Rohr 4 als flexible Leitung aus einem Gummiwerkstoff ausgebildet sein.

Der Steckverbinder 2 umfasst einen Verbinderkörper 5, welcher vorzugsweise als einteiliges Umformteil, etwa als Tiefziehteil, insbesondere aus einem Edelstahlblech gebildet ist.

Die Steckerbaugruppe 1 wird vorzugsweise in einem Kraftfahrzeug, insbesondere in einem straßengebundenen Kraftfahrzeug mit Verbrennungsmotor, wie etwa einem PKW oder einem LKW eingesetzt.

Natürlich ist es auch denkbar, dass die Steckerbaugruppe 1 in einer sonstigen Anwendung mit Verbrennungsmotor verwendet wird. Dies kann beispielsweise der Einsatz der Steckerbaugruppe 1 in einem stationären Aggregat, in einem Schiffsmotor, in einem Flugzeugmotor, in einer Baumaschine usw. sein.

Im Speziellen kann die Steckerbaugruppe 1 zum Verbinden verschiedener Bauteile der Frischluftzuführung zum Verbrennungsmotor eingesetzt werden. Beispielsweise kann vorgesehen sein, dass der Steckverbinder 2 mit dem entsprechenden Gegensteckverbinder 3 zur Verbindung zweier Teile im Ansaugbereich eines Turboladers vorgesehen ist. Weiters kann beispielsweise auch vorgesehen sein, dass eine derartige Steckerbaugruppe 1 in der vom Turbolader abgehenden Druckseite zur Verbindung zweier Bauteile eingesetzt wird.

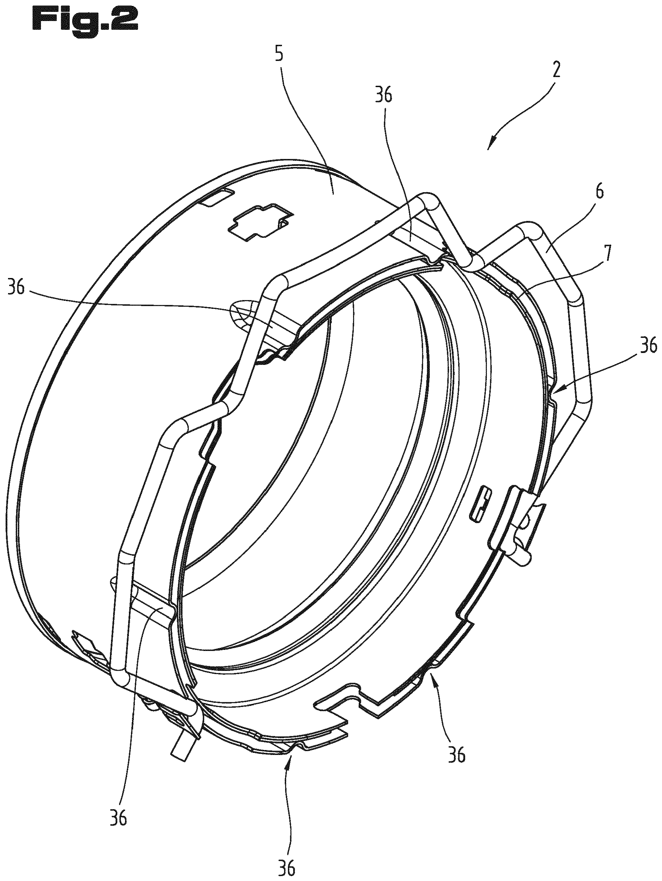

Fig. 2 zeigt einen Querschnitt des Steckverbinder 2 wobei die Schnittführung so gewählt wurde, dass ein im Steckverbinder 2 verbautes Arretierungselement 6 zum Sichern des Steckverbinders 2 und des Gegensteckverbinders 3 zueinenander ersichtlich ist.

Das Arretierungselement 6 ist derart konstruiert, dass es leicht aktiviert und deaktiviert werden kann, sodass der Steckverbinder 2 und der Gegensteckverbinder 3 bedarfsweise voneinander getrennt bzw. miteinander verbunden werden können. Das Arretierungselement 6 kann in eine Raststellung gebracht werden, in welcher der Steckverbinder 2 und der Gegensteckverbinder 3 zueinander gesichert sind. Weiters kann das Arretierungselement 6 in eine Freigabestellung gebracht werden, in welcher der Gegensteckverbinder 3 in den Steckverbinder 2 eingesetzt oder aus diesem herausgenommen werden kann.

Wie aus Fig. 2 weiters ersichtlich, ist in den Verbinderkörper 5 ein Verstärkungselement 7 eingesetzt, welches zur Verbesserung der Steifigkeit des Verbinderkörpers 5 dient. Das Verstärkungselement 7 kann wie in Fig. 2 gut ersichtlich als Hülsensegment ausgebildet sein, und daher ein über den Umfang gesehen offenes Zwischenstück aufweisen. In einer weiteren Ausführungsvariante kann das Verstärkungselement 7 als Hülse ausgebildet sein und daher einen geschlossenen Umfang aufweisen.

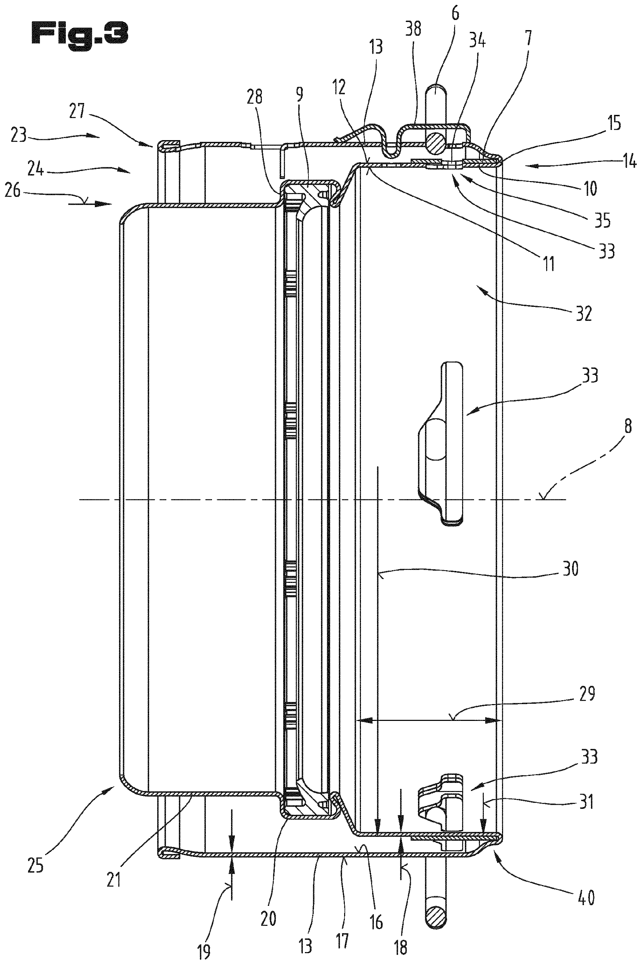

Fig. 3 zeigt einen Schnitt durch die Steckerbaugruppe 1 entlang einer zentralen Längsachse 8 des Steckverbinders 2.

Wie in Fig. 3 gut ersichtlich, kann der Steckverbinder 2 neben dem Verbinderkörper 5 eine Steckerdichtung 9 umfassen, welche im Verbinderkörper 5 aufgenommen ist. Die Steckerdichtung 9 dient dazu, um den Steckverbinder im zusammengesteckten Zustand mit dem Gegensteckverbinder 3 ausreichend abdichten zu können.

Wie in Fig. 3 ersichtlich, ist am Verbinderkörper 5 ein erster Mantelabschnitt 10 ausgebildet, welcher die zentrale Längsachse 8 des Steckverbinders 2 hülsenförmig umgibt. Mit anderen Worten ausgedrückt, ist der erste Mantelabschnitt 10 ein rotationssymmetrischer Hohlzylinder.

Der erste Mantelabschnitt 10 weist eine innenliegende Mantelfläche 11 und eine außenliegende Mantelfläche 12 auf. Den ersten Mantelabschnitt 10 umgibt ein zweiter Mantelabschnitt 13, welcher ebenfalls bezüglich der zentralen Längsachse 8 rotationssymmetrisch ausgebildet ist. Der erste Mantelabschnitt 10 ist mit dem zweiten Mantelabschnitt 13 an einem ersten Endabschnitt 14 mittels eines ersten Stirnwandabschnittes 15 verbunden. Der erste Stirnwandabschnitt 15 kann verschiedenartig ausgebildet sein. Insbesondere kann vorgesehen sein, dass der erste Stirnwandabschnittes 15 in Form eines Falzes ausgebildet ist, wobei der zweite Mantelabschnitt 13 gegenüber dem ersten Mantelabschnitt 10 um etwa 180° umgeschlagen ist, wodurch der zweite Mantelabschnitt 13 den ersten Mantelabschnitt 10 umgebend angeordnet ist.

Gleich wie der erste Mantelabschnitt 10 weist auch der zweite Mantelabschnitt 13 eine innenliegende Mantelfläche 16 und eine außenliegende Mantelfläche 17 auf.

Der erste Mantelabschnitt 10 wird durch seine innenliegende Mantelfläche 11 und die außenliegende Mantelfläche 12 begrenzt, wodurch sich eine Wandstärke 18 des ersten Mantelabschnittes 10 ergibt. Der zweite Mantelabschnitt 13 wird ebenfalls durch eine innenliegende Mantelfläche 16 und eine außenliegende Mantelfläche 17 begrenzt, wodurch sich eine Wandstärke 19 des zweiten Mantelabschnittes 13 ergibt.

Der erste Mantelabschnitt 10 ist im dargestellten Ausführungsbeispiel abgestuft ausgeführt. Dabei kann vorgesehen sein, dass an den ersten Mantelabschnitt 10 an der gegenüberliegenden Seite des ersten Endabschnittes 14 des Steckverbinders 2, eine Dichtungsaufnahme 20 anschließt, welche ebenfalls im Verbinderkörper 5 ausgeformt ist. In einer derartigen Dichtungsaufnahme 20 kann eine Steckerdichtung 9 aufgenommen sein. Weiters kann vorgesehen sein, dass an die Dichtungsaufnahme 20 ein dritter Mantelabschnitt 21 anschließt, welcher zusammen mit dem zweiten Mantelabschnitt 13 einen Ringraum 22 zur Aufnahme des Rohres 4 bildet.

Der zweite Mantelabschnitt 13 und der dritte Mantelabschnitt 21 sind an einem zweiten Endabschnitt 23 des Steckverbinders 2 offen zueinander, wodurch sich eine Rohraufnahmeseite 24 des Verbinderkörpers 5 ergibt.

Es kann vorgesehen sein, dass der dritte Mantelabschnitt 21 im Bereich des zweiten Endabschnittes 23 eine Abschrägung 25 aufweist, welche an der Rohraufhahmeseite 24 ausgebildet ist. Eine derartige Abschrägung 25 bringt den Vorteil mit sich, dass das Rohr 4 oder ein zur Abdichtung des Rohres 4 verwendetes Dichtungselement leicht in Einschieberichtung 26 in den Ringraum 22 eingeschoben werden kann. Darüber hinaus kann auch vorgesehen sein, dass der zweite Mantelabschnitt 13 eine derartige Abschrägung 27 aufweist, sodass auch das Rohr 4 leicht in den Ringraum 22 eingeschoben werden kann. Anschließend kann das Rohr 4 mit dem Verbinderkörper 5 verpresst werden, sodass die beiden Bauteile eine Einheit bilden. Die Abschrägungen 25, 27 können beispielsweise durch Umbördelungen mit entsprechenden Radien oder durch Aufweitungen realisiert werden und werden vorzugsweise während des Tiefziehvorganges ausgeformt.

Bevorzugt wird der Verbinderkörper 5 in einem Tiefziehverfahren hergestellt, wobei sämtliche Wandstärken der Mantelabschnitte des Verbinderkörpers 5 in etwa gleich groß sind.

Wie in der Ansicht in Fig. 3 ersichtlich, kann es auch zweckmäßig sein, dass die Dichtungsaufnahme 20 eine Stirnwandung 28 aufweist, welche an den dritten Mantelabschnitt 21 anschließt. Durch die Stirnwandung 28 kann insbesondere eine Aufnahmemulde für die Steckerdichtung 9 ausgebildet sein.

Der erste Mantelabschnitt 10 weist einen Außendurchmesser 30 und eine axiale Erstreckung 29 auf. Ein Innendurchmesser 31 des Verstärkungselementes 7 ist vorzugsweise in etwa gleich groß gewählt, wie der Außendurchmesser 30 des ersten Mantelabschnittes 10.

Im Bereich des ersten Mantelabschnittes 10 weist der Steckverbinder 2 einen Aufnahmeraum 32 auf. Der Aufnahmeraum 32 wird vom ersten Mantelabschnitt 10 umgeben und dient zur Aufnahme eines Teils des Gegensteckverbinders 3.

Der Verbinderkörper 5 weist mehrere, in Umfangsrichtung voneinander beabstandete Durchtrittsöffnungen 33 auf, welche ebenfalls im Bereich des ersten Mantelabschnitt 10 angeordnet sind. In der Raststellung des Arretierungselementes 6, welche diese im eingesteckten und verrasteten Zustand einnimmt, ragt das Arretierungselement 6 durch die jeweilige Durchtrittsöffnung 33 in den Aufnahmeraum 32. In diesen Abschnitten wirkt das Arretierungselement 6 mit einer Verriegelungsfläche einer Rastschulter des Gegensteckverbinders 3 zusammen.

Aus Fig. 3 ist weiters ersichtlich, dass das Verstärkungselement 7 eine Ausnehmung 34 aufweist, welche mit einer der Durchtrittsöffnungen 33 korrespondiert und somit das Arretierungselement 6 durch das Verstärkungselement 7 durchgeführt werden kann. Insbesondere ist es denkbar, dass eine erste Art von Durchtrittsöffnungen 33' und eine zweite Art von Durchtrittsöffnungen 33" ausgebildet sind. Damit korrespondierend kann eine erste Art von Ausnehmungen 34' und eine zweite Art von Ausnehmungen 34" ausgebildet sein.

Insbesondere kann vorgesehen sein, dass die Ausnehmung 34" des Verstärkungselementes 7 und die Durchtrittsöffnung 33" des Verbinderkörpers 5 zumindest teilweise dieselbe Außenkontur aufweisen bzw. deckungsgleich zueinander angeordnet sind.

Insbesondere können die Durchtrittsöffnung 33' und die Ausnehmung 34' zur Gänze deckungsgleich ausgebildet sein, wodurch sich eine gemeinsame Durchtrittsöffnung 35 ergibt.

Wie aus einer Zusammenschau der Fig. 2 und 3 ersichtlich, kann weiters vorgesehen sein, dass im zweiten Mantelabschnitt 13 des Verbinderkörpers 5 eine oder mehrere Sicken 36 eingebracht sind, mittels welchen das Verstärkungselement 7 im Zwischenraum zwischen ersten Mantelabschnitt 10 und zweiten Mantelabschnitt 13 geklemmt werden kann. Durch die Sicken 36 kann das Verstärkungselement 7 in radialer Richtung fixiert werden bzw. durch eine radiale Klemmung gegebenenfalls auch in axialer Richtung in Position gehalten werden. Die Sicken 36 können zusätzlich zur Erhöhung der Stabilität des zweiten Mantelabschnittes 13 beitragen.

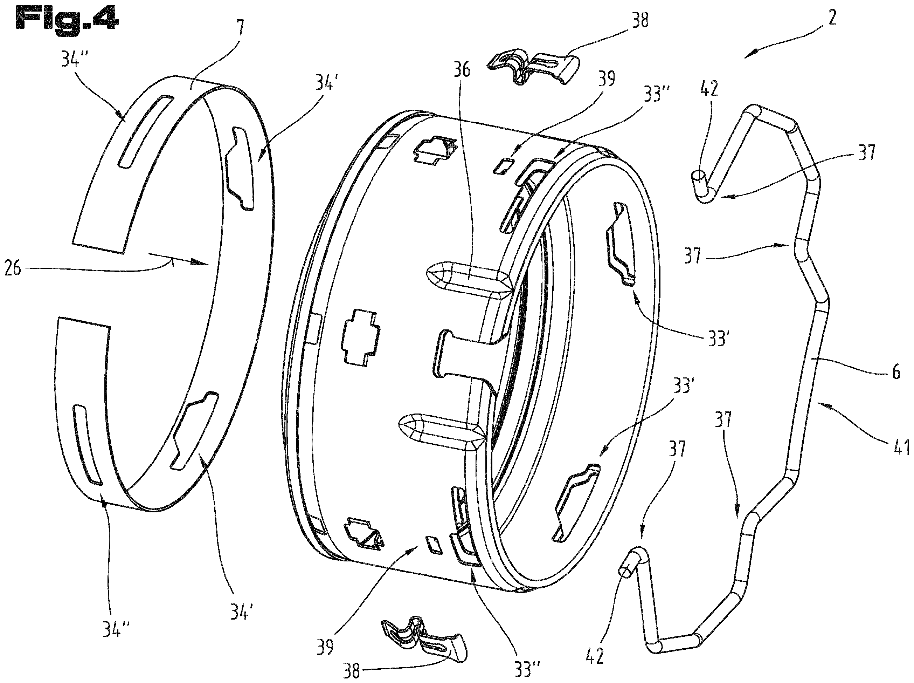

Fig. 4 zeigt eine Explosionsdarstellung der einzelnen Bauteile des Steckverbinders 2, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

In Fig. 4 ist gut ersichtlich, dass das Arretierungselement 6 beispielsweise vier Rastbereiche 37 aufweisen kann, welche zum Durchragen durch die Durchtrittsöffnungen 33 des Verbinderkörpers 5 ausgebildet sind. Die Rastbereiche 37 sind daher als nach innen stehende V-förmige Elemente ausgebildet. Wie aus Fig. 4 weiters ersichtlich, umfasst der Steckverbinder 2 darüber hinaus Halteelemente 38, welche in eine Halteelementaufnahme 39 eingesetzt sind und zur Sicherung des Arretierungselementes 6 dienen.

Das Verstärkungselement 7 ist in der Fig. 4 bereits vorgefertigt dargestellt, wobei es vorgebogen ist und die Ausnehmungen 34 bereits in das Verstärkungselement 7 eingebracht sind. Insbesondere ist ersichtlich, dass das Verstärkungselement 7 als Hülsensegment ausgebildet sein kann. Weiters ist ersichtlich, dass vorgesehen sein kann, dass beispielsweise die zwei Ausnehmungen 34" schlitzförmig ausgebildet sind. Die zwei Ausnehmungen 34' können die exakt gleiche Außenkontur wie die damit korrespondierenden Durchtrittsöffnungen 33' aufweisen.

In einer weiteren nicht dargestellten Ausführungsvariante kann auch vorgesehen sein, dass die Ausnehmungen 34 nicht oder nur teilweise in das vorgefertigte Verstärkungselement 7 eingebracht sind und dass diese erst ausgebildet werden, wenn das Verstärkungselement 7 in den Verbinderkörper 5 eingesetzt ist. Dabei kann das Verstärkungselement 7 im eingesetzten Zustand zusammen mit dem Verbinderkörper 5 gestanzt werden.

Um eine Versteifung des Verbinderkörpers 5 durch das Verstärkungselement 7 zu erreichen, kann vorgesehen sein, dass das Verstärkungselement 7 eine höhere Festigkeit aufweist als der Verbinderkörper 5. Da das Verstärkungselement 7 nicht so stark umgeformt werden muss, wie der Verbinderkörper 5, kann vorgesehen sein, dass der Verbinderkörper 5 aus einem ersten Werkstoff und das Verstärkungselement 7 aus einem zweiten Werkstoff gefertigt ist, wobei der zweite Werkstoff eine geringere Umformfähigkeit aufweist als der erste Werkstoff.

Im Folgenden wird der mögliche Zusammenbau des Steckverbinders 2 beschrieben. In einem ersten Verfahrensschritt wird der Verbinderkörper 5 durch Umformen, insbesondere durch Tiefziehen, aus einem ebenen Blechmaterial gefertigt. Dabei können während des Tiefziehvorganges die im Umfang des Verbinderkörpers 5 angeordneten Ausnehmungen 34 bzw. 39 eingestanzt werden.

In einem weiteren Verfahrensschritt kann das Verstärkungselement 7 ebenfalls durch Umformen in seine Form gebracht werden.

Weiters kann vorgesehen sein, dass zumindest eine der Durchtrittsöffnungen 33 bzw. die damit korrespondierende Ausnehmung 34 erst in einem folgenden Stanzvorgang hergestellt werden, wenn das Verstärkungselement 7 bereits im Verbinderkörper 5 eingelegt ist. Dadurch können die Ausnehmung 34 und die Durchtrittsöffnung 33 in Form einer gemeinsamen Durchtrittsöffnung 35 hergestellt werden, wobei durch den Stanzvorgang sich das Verstärkungselement 7 und der Verbinderkörper 5 formschlüssig ineinander verkeilen und dadurch die axiale Positionierung des Verstärkungselementes 7 verbessert wird.

In einer Alternativvariante kann vorgesehen sein, dass die Ausnehmungen 34 bereits vor dem Einlegen in den Verbinderkörper 5 in das Verstärkungselement 7 eingebracht werden.

In einem weiteren Verfahrensschritt kann das Verstärkungselement 7 in Einschieberichtung 26 in den Verbinderkörper 5 eingeschoben und in diesem eingesetzt werden. Hierbei ist es denkbar, dass das Verstärkungselement 7 in einen Falzbereich 40 eingeschoben wird, welcher im Verbinderkörper 5 im Bereich des Stirnwandabschnittes 15 ausgebildet ist. Durch diesen Falzbereich 40 kann radial ein schmaler Schlitz gebildet sein, in welchen das Verstärkungselement 7 eingeschoben werden kann. Insbesondere kann vorgesehen sein, dass das Verstärkungselement 7 im Falzbereich 40 geklemmt wird.

Zusätzlich können zur axialen und radialen Positionierung und Fixierung des Verstärkungselementes 7 die Sicken 36 dienen. Diese können schon vorab in den Verbinderkörper 5 eingebracht sein. In einer alternativen Herstellvariante können die Sicken 36 auch nach dem Einsetzen des Verstärkungselementes 7 in den Verbinderkörper 5 eingebracht werden, um das Verstärkungselement 7 klemmen zu können.

In einem weiteren Verfahrensschritt kann das Arretierungselement 6 in den Verbinderkörper 5 eingesetzt werden und anschließend die Halteelemente 38 zur Sicherung des Arretierungselementes 6 in den Verbinderkörper 5 eingesetzt werden.

Das Arretierungselement 6 weist einen Haltebereich 41 auf, an welchem es gegriffen werden kann, um in den Verbinderkörper 5 eingesetzt werden zu können und zwischen Raststellung und Freigabestellung bewegt werden zu können.

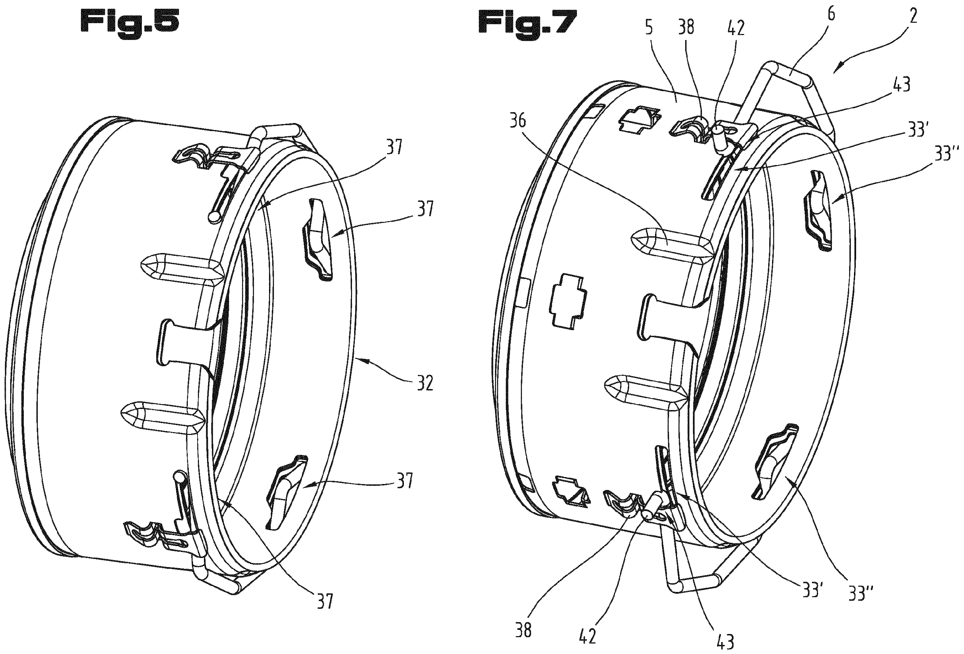

Fig. 5 zeigt eine perspektivische Ansicht des Steckverbinders 2, wobei sich das Arretierungselement 6 in der Raststellung befindet.

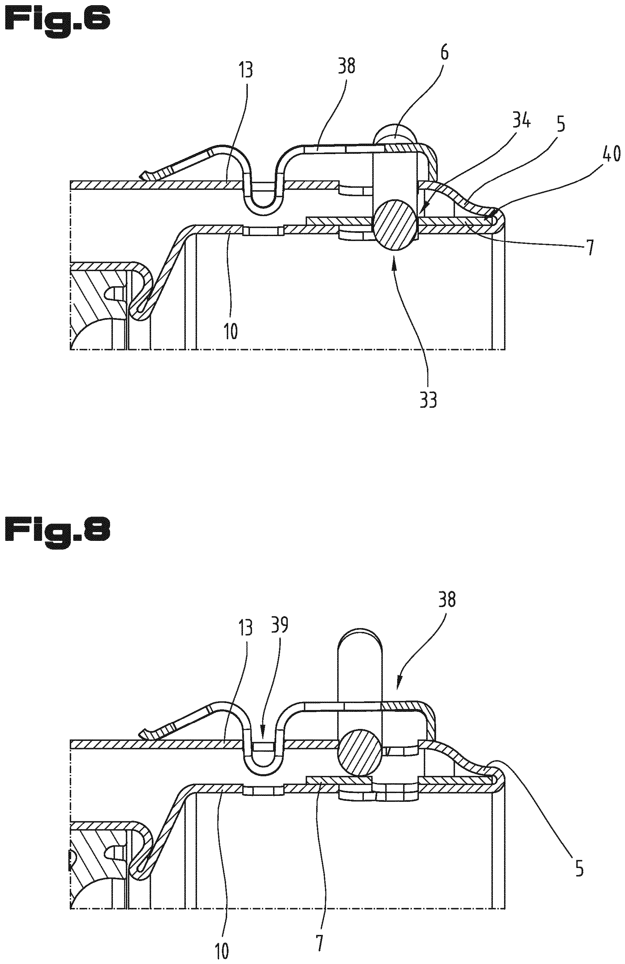

Fig. 6 zeigt eine Detailansicht des Arretierungselementes 6 welches sich in der Raststellung befindet.

Fig. 7 zeigt eine perspektivische Ansicht des Steckverbinders 2, wobei sich das Arretierungselement 6 in der Freigabestellung befindet.

Fig. 8 zeigt eine Detailansicht des Arretierungselementes 6 welches sich in der Freigabestellung befindet.

In den Figuren 5 bis 8 ist weitere und gegebenenfalls für sich eigenständige Ausführungsform des Steckverbinders 2 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Besonders gut ist die Raststellung des Arretierungselementes 6 in einer Zusammenschau der Fig. 5 und 6 und die Freigabestellung des Arretierungselementes 6 in einer Zusammenschau der Fig. 7 und 8 ersichtlich. Wenn sich das Arretierungselement 6 in seiner Raststellung befindet ragen die Rastbereiche 37 in den Aufnahmeraum 32 und der Gegensteckverbinder 3 ist relativ zum Steckverbinder 2 axial gesichert. Wenn sich das Arretierungselement 6 in seiner Freigabestellung befindet ragen die Rastbereiche 37 nicht in den Aufnahmeraum 32 und der Gegensteckverbinder 3 ist relativ zum Steckverbinder 2 axial verschiebbar.

Wie in Fig. 6 ersichtlich, kann vorgesehen sein, dass die Ausnehmung 34 im Verstärkungselement 7 schlitzförmig ausgebildet ist, wobei der Schlitz in etwa eine Breite aufweist, welche dem Durchmesser des Arretierungselementes 6 entspricht. Dadurch kann das Arretierungselement 6 axial fixiert werden.

Wenn man nun am Haltebereich 41 in radialer Richtung weg von der Längsachse des Steckverbinders 2 am Arretierungselement 6 anzieht, so werden aufgrund der Geometrie des Arretierungselementes 6 die Rastbereiche 37 aus dem Aufnahmeraum 32 herausgezogen. Insbesondere wird das Arretierungselement 6 soweit radial nach außen bewegt, bis es in die Freigabestellung entsprechend den Fig. 7 und 8 gebracht ist.

Kurz vor Erreichen der Freigabestellung trifft ein Führungszapfen 42 des Arretierungselementes 6 auf das Halteelement 38 und wird dadurch axial umgelenkt, sodass sich das Arretierungselement 6 in die Freigabestellung bewegt. Insbesondere kann vorgesehen sein, dass im Halteelement 38 eine Abschrägung 43 ausgebildet ist, durch welche bei radialem Zug am Haltebereich 41 eine axiale Bewegung in das Arretierungselement 6 eingeleitet wird. Nach erfolgreicher axialer Verschiebung kann das Arretierungselement 6 losgelassen werden, wobei der Führungszapfen 42 am Verbinderkörper 5 bzw., wie in Fig. 8 besonders gut ersichtlich, am Verstärkungselement 7 aufliegt und somit in der Freigabestellung verbleibt, wobei das Arretierungselement 6 vorgespannt ist.

Um das Arretierungselement 6 aus der Freigabestellung wieder zurück in die Raststellung zu bewegen kann das Arretierungselement 6 geringfügig axial verschoben werden und durch die anliegende Vorspannung des Arretierungselementes 6 bewegt sich dieses selbstständig zurück in die Raststellung, sobald es in die Ausnehmungen 34'des Arretierungselementes 6 eintauchen kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Steckerbaugruppe | 28 | Stirnwandung Dichtungsaufnahme |
| 2 | Steckverbinder | 29 | Axiale Erstreckung erster Mantelabschnitt |
| 3 | Gegensteckverbinder | 30 | Außendurchmesser erster Mantelabschnitt |
| 4 | Rohr | 31 | Innendurchmesser |
| 5 | Verbinderkörper | 32 | Aufnahmeraum |
| 6 | Arretierungselement | 33 | Durchtrittsöffnung |
| 7 | Verstärkungselement | 34 | Ausnehmung |
| 8 | Längsachse des Steckverbinders | 35 | gemeinsame Durchtrittsöffnung |
| 9 | Steckerdichtung | 36 | Sicke |
| 10 | erster Mantelabschnitt | 37 | Rastbereich |
| 11 | innenliegende Mantelfläche | 38 | Halteelement |
| 12 | außenliegende Mantelfläche | 39 | Halteelementaufhahme |
| 13 | zweiter Mantelabschnitt | 40 | Falzbereich |
| 14 | erster Endabschnitt Steckverbinder | 41 | Haltebereich |
| 15 | Stirnwandabschnitt | 42 | Führungszapfen |
| 16 | innenliegende Mantelfläche | 43 | Abschrägung |
| 17 | außenliegende Mantelfläche | | |
| 18 | Wandstärke erster Mantelabschnitt | | |
| 19 | Wandstärke zweiter Mantelabschnitt | | |
| 20 | Dichtungsaufnahme Steckverbinder | | |
| 21 | Dritter Mantelabschnitt | | |
| 22 | Ringraum | | |
| 23 | zweiter Endabschnitt Steckverbinder | | |
| 24 | Rohraufhahmeseite | | |
| 25 | Abschrägung | | |
| 26 | Einschieberichtung | | |
| 27 | Abschrägung | | |

## Patentansprüche

1. Steckverbinder (2) zum Verbinden von Leitungen für flüssige oder gasförmige Medien, mit einem Verbinderkörper (5), welcher Verbinderkörper (5) einen Ringraum (22) aufweist, der zwischen einem hülsenförmigen, im Querschnitt eine zentrale Längsachse (8) des Steckverbinders (2) umgebenden, ersten Mantelabschnitt (10) und einem hülsenförmigen, im Querschnitt die zentrale Längsachse (8) umgebenden, zweiten Mantelabschnitt (13) des Steckverbinders (2) liegt, wobei der erste Mantelabschnitt (10) vom zweiten Mantelabschnitt (13) umgeben ist und der erste Mantelabschnitt (10) des Verbinderkörpers (5) mit dem zweiten Mantelabschnitt (13) an einem ersten Endabschnitt (14) durch einen ersten Stirnwandabschnitt (15) verbunden ist und die Mantelabschnitte (10, 13) an einem zweiten Endabschnitt (23) offen zueinander sind, wobei im ersten Mantelabschnitt (10) und im zweiten Mantelabschnitt (13) zumindest zwei Durchtrittsöffnungen (33) ausgebildet sind, welche zur Aufnahme eines Arretierungselementes (6) vorgesehen sind, welches Arretierungselement (6) zum Sichern des Steckverbinders (2) relativ zu einem Gegensteckverbinder (3) vorgesehen ist, wobei im Verbinderkörper (5) zwischen dem ersten Mantelabschnitt (10) und dem zweiten Mantelabschnitt (13) ein Verstärkungselement (7) eingelegt ist, **dadurch gekennzeichnet, dass** das Verstärkungselement (7) zumindest eine Ausnehmung (34) aufweist, welche zumindest teilweise mit einer der Durchtrittsöffnungen (33) korrespondiert.

2. Steckverbinder nach Anspruch 1, **dadurch gekennzeichnet, dass** das Verstärkungselement (7) zumindest im Bereich einer der Durchtrittsöffnungen (33) angeordnet ist.

3. Steckverbinder nach einem der vorhergehenden Ansprüche, **dadurch gekennzeichnet, dass** der Verbinderkörper (5) vier Durchtrittsöffnungen (33) aufweist, welche dazu ausgebildet sind um vom Arretierungselement (6) durchragt zu werden, wobei die zumindest eine Ausnehmung (34') des Verstärkungselementes (7) mit zumindest einer der Durchtrittsöffnungen (33') deckungsgleich ist und dadurch eine gemeinsame Durchtrittsöffnung (35) ausgebildet ist.

4. Steckverbinder nach einem der vorhergehenden Ansprüche, **dadurch gekennzeichnet, dass** die zumindest eine Ausnehmung (34) des Verstärkungselementes (7) kleiner ausgebildet ist als die damit korrespondierende Durchtrittsöffnung (33).

5. Steckverbinder nach einem der vorhergehenden Ansprüche, **dadurch gekennzeichnet, dass** das Verstärkungselement (7) als Hülsensegment ausgebildet ist.

6. Steckverbinder nach einem der vorhergehenden Ansprüche, **dadurch gekennzeichnet, dass** ein Außdendurchmesser (30) des ersten Mantelabschnittes (10) gleich groß ist, wie ein Innendurchmesser (31) des Verstärkungselementes (7).

7. Steckverbinder nach einem der vorhergehenden Ansprüche, **dadurch gekennzeichnet, dass** im zweiten Mantelabschnitt (13) zumindest eine Sicke (36) ausgebildet ist, mittels welcher das Verstärkungselement (7) in radialer Richtung fixiert ist.

8. Steckverbinder nach einem der vorhergehenden Ansprüche, **dadurch gekennzeichnet, dass** der Verbinderkörper (5) aus einem ersten Werkstoff und das Verstärkungselement (7) aus einem zweiten Werkstoff gefertigt ist, wobei der zweite Werkstoff eine höhere Festigkeit aufweist als der erste Werkstoff.

9. Verfahren zum Herstellen eines Steckverbinders nach einem der vorhergehenden Ansprüche, wobei
in einem ersten Verfahrensschritt der Verbinderkörper (5) geformt wird und optional die Durchtrittsöffnungen (33) in den Verbinderkörper (5) eingebracht werden;
in einem weiteren Verfahrensschirtt ein Verstärkungselement (7) vorgeformt wird;
in einem weiteren Verfahrensschritt das Verstärkungselement (7) axial in den Verbinderkörper (5) eingeschoben und im Verbinderkörper (5) positioniert wird, **dadurch gekennzeichnet, dass** in einem weiteren Verfahrensschritt der Verbinderkörper (5) und das Verstärkungselement (7) gemeinsam gestanzt werden und dadurch eine gemeinsame Durchtrittsöffnung (35) hergestellt wird.

## Claims

1. A plug connector (2) for connecting conduits for liquid or gaseous media, having a connector body (5), said connector body (5) comprising an annulus (22) which is located between a sleeve-shaped first casing section (10) in cross-section surrounding a central longitudinal axis (8) of the plug connector (2) and a sleeve-shaped second casing section (13) of the plug connector (2) in cross-section surrounding the central longitudinal axis (8), wherein the first casing section (10) is surrounded by the second casing section (13) and the first casing section (10) of the connector body (5) is connected to the second casing section (13) at a first end section (14) by a first front wall section (15) and the casing sections (10, 13) are open to one another at a second end section (23), wherein in the first casing section (10) and in the second casing section (13) at least two passages (33) are formed, which are provided for receiving a locking element (6), said locking element (6) being provided for securing the plug connector (2) relative to a counter plug connector (3), wherein in the connector body (5) a reinforcing element (7) is inserted between the first casing section (10) and the second casing section (13), **characterized in that** the reinforcing element (7) comprises at least one recess (34), which at least partially corresponds to one of the passages (33).

2. The plug connector according to claim 1, **characterized in that** the reinforcing element (7) is arranged at least in the region of one of the passages (33).

3. The plug connector according to one of the preceding claims, **characterized in that** the plug connector (5) comprises four passages (33), which are designed to be passed through by the locking element (6), wherein the at least one recess (34') of the reinforcing element (7) is congruent with at least one of the passages (33') and in this way a common passage (35) is formed.

4. The plug connector according to one of the preceding claims, **characterized in that** the at least one recess (34) of the reinforcing element (7) is designed to be smaller than the corresponding passage (33).

5. The plug connector according to one of the preceding claims, **characterized in that** the reinforcing element (7) is designed as a sleeve segment.

6. The plug connector according to one of the preceding claims, **characterized in that** an outer diameter (30) of the first casing section (10) is of the same size as an inner diameter (31) of the reinforcing element (7).

7. The plug connector according to one of the preceding claims, **characterized in that** in the second casing section (13) at least one beading (36) is formed, by means of which the reinforcing element (7) is fixed in radial direction.

8. The plug connector according to one of the preceding claims, **characterized in that** the connector body (5) is made from a first material and the reinforcing element (7) is made from a second material, wherein the second material has greater strength than the first material.

9. A method for producing a plug connector according to one of the preceding claims, wherein
in a first method step the connector body (5) is shaped and optionally the passages (33) are formed in the connector body (5);
in a further method step a reinforcing element (7) is pre-formed;
in a further method step the reinforcing element (7) is pushed axially into the connector body (5) and is positioned in the connector body (5),
**characterized in that** in a further method step the connector body (5) and the reinforcing element (7) are punched jointly and in this way a common passage (35) is produced.

## Revendications

1. Connecteur (2) pour la liaison de conduites pour des milieux liquides ou gazeux, avec un corps de connecteur (5), ce corps de connecteur (5) comprenant un espace annulaire (22) qui se trouve entre une première portion d'enveloppe (10) en forme de manchon, entourant en coupe transversale un axe longitudinal central (8) du connecteur (2), et une deuxième portion d'enveloppe (13) du connecteur (2), en forme de manchon, entourant en coupe transversale l'axe longitudinal central (8), dans lequel la première portion d'enveloppe (10) est entourée par la deuxième portion d'enveloppe (13) et la première portion d'enveloppe (10) du corps de connecteur (5) est reliée avec la deuxième portion d'enveloppe (13) au niveau d'une première portion d'extrémité (14) par une première portion de paroi frontale (15) et les portions d'enveloppe (10, 13) sont ouvertes l'une par rapport à l'autre au niveau d'une deuxième portion d'extrémité (23), dans lequel, dans la première portion d'enveloppe (10) et dans la deuxième portion d'enveloppe (13) sont réalisées au moins deux ouvertures de passage (33) qui sont prévues pour le logement d'un élément d'arrêt (6), cet élément d'arrêt (6) étant prévu pour la sécurisation du connecteur (2) par rapport à un contre-connecteur (3), dans lequel, dans le corps de connecteur (5), entre la première portion d'enveloppe (10) et la deuxième portion d'enveloppe (13), est inséré un élément de renfort (7), **caractérisé en ce que** l'élément de renfort (7) comprend au moins un évidement (34) qui correspond au moins partiellement à une des ouvertures de passage (33).

2. Connecteur selon la revendication 1, **caractérisé en ce que** l'élément de renfort (7) est disposé au moins au niveau d'une des ouvertures de passage (33).

3. Connecteur selon l'une des revendications précédentes, **caractérisé en ce que** le corps de connecteur (5) comprend quatre ouvertures de passage (33) qui sont conçues pour être traversées par l'élément d'arrêt (6), dans lequel l'au moins un évidement (34') de l'élément de renfort (7) est coextensif avec au moins une des ouvertures de passage (33') et constitue ainsi une ouverture de passage commune (35).

4. Connecteur selon l'une des revendications précédentes, **caractérisé en ce que** l'au moins un évidement (34) de l'élément de renfort (7) est plus petit que l'ouverture de passage (33) correspondante.

5. Connecteur selon l'une des revendications précédentes, **caractérisé en ce que** l'élément de renfort (7) est conçu comme un segment de manchon.

6. Connecteur selon l'une des revendications précédentes, **caractérisé en ce qu'**un diamètre extérieur (30) de la première portion d'enveloppe (10) est égal à un diamètre intérieur (31) de l'élément de renfort (7).

7. Connecteur selon l'une des revendications précédentes, **caractérisé en ce que**, dans la deuxième portion d'enveloppe (13) est réalisée au moins une moulure (36) au moyen de laquelle l'élément de renfort (7) est fixé dans la direction radiale.

8. Connecteur selon l'une des revendications précédentes, **caractérisé en ce que** le corps de connecteur (5) est constitué d'un premier matériau et l'élément de renfort (7) est constitué d'un deuxième matériau, dans lequel le deuxième matériau présente une résistance supérieure à celle du premier matériau.

9. Procédé de fabrication d'un connecteur selon l'une des revendications précédentes, dans lequel
dans une première étape, le corps de connecteur (5) est moulé et en option les ouvertures de passage (33) sont réalisées dans le corps de connecteur (5) ;
dans une autre étape, un élément de renfort (7) est pré-moulé ;
dans une autre étape, l'élément de renfort (7) est inséré axialement dans le corps de connecteur (5) et est positionné dans le corps de connecteur (5), **caractérisé en ce que**, dans une autre étape, le corps de connecteur (5) et l'élément de renfort (7) sont emboutis ensemble et une ouverture de passage commune (35) est ainsi réalisée.
